# EUROPÄISCHE PATENTSCHRIFT

(11) **EP 2 777 474 B1**
(45) Veröffentlichungstag und Bekanntmachung des Hinweises auf die Patenterteilung: **10.05.2017**
(21) Anmeldenummer: 14401020.4
(22) Anmeldetag: 04.02.2014
(51) Int. Cl.: A47L 15/48, A47L 15/00, A47L 15/42

(54) **Geschirrspülautomat**
Dishwasher
Lave-vaisselle

(30) Priorität: 26.02.2013 DE 102013101862
(43) Veröffentlichungstag der Anmeldung: 17.09.2014
(73) Patentinhaber: Miele & Cie. KG, 33332 Gütersloh (DE)
(72) Erfinder: Bertram, Andre, 33739 Bielefeld (DE); Dahms, Tobias, 30519 Hannover (DE)

(56) Entgegenhaltungen:
- EP-A1- 2 478 969
- EP-A2- 2 206 824
- EP-A2- 2 386 674
- EP-A2- 2 474 261
- DE-A1- 1 610 189
- DE-A1- 3 738 031
- DE-A1- 19 547 613
- DE-A1-102007 052 835
- DE-C1- 10 002 742
- JP-A- 2007 125 198

## Beschreibung

Die Erfindung betrifft einen Geschirrspülautomaten, insbesondere eine Haushaltsgeschirrmaschine, mit einer Wärmepumpeneinrichtung zur Aufheizung von Spülflotte, die einen Verdampfer und ein Gebläse aufweist, wobei das Gebläse der Beaufschlagung des Verdampfers mit Umgebungsluft dient.

Geschirrspülautomaten der eingangs genannten, das heißt gattungsgemäßen Art sind aus dem Stand der Technik an sich bekannt, weshalb es eines gesonderten druckschriftlichen Nachweises an dieser Stelle nicht bedarf.

Geschirrspülautomaten der eingangs genannten Art verfügen über einen Spülbehälter, der seinerseits einen Spülraum bereitstellt. Im bestimmungsgemäßen Verwendungsfall dient der Spülbehälter der Aufnahme von zu reinigendem Spülgut. Dabei ist der vom Spülbehälter bereitgestellte Spülraum verwenderseitig über eine Beschickungsöffnung zugänglich. Diese ist mittels einer verschwenkbar ausgebildeten Spülmaschinentür fluiddicht verschließbar.

Zur Beschickung von zu reinigendem Spülgut mit Spülflotte verfügt ein Geschirrspülautomat über eine spülraumseitig ausgebildete Sprüheinrichtung. Diese weist in der Regel zwei oder drei verdrehbar ausgebildete Sprüharme auf, mittels welcher im bestimmungsgemäßen Betrieb von einer Umwälzpumpe geförderte Spülflotte auf das zu reinigende Spülgut gesprüht wird.

Zur Aufheizung der Spülflotte kommen typischerweise elektrische Heizungen zum Einsatz. Es sind aus dem Stand der Technik darüber hinaus Wärmepumpeneinrichtungen zur Aufheizung von Spülflotte bekannt geworden. Derlei Wärmepumpeneinrichtungen entziehen zur Aufheizung der Spülflotte der den Geschirrspülautomat umgebenden Raum- bzw. Umgebungsluft Wärme. Zu diesem Zweck verfügt eine Wärmepumpeneinrichtung über einen Verdampfer und ein Gebläse, wobei das Gebläse dazu dient, den Verdampfer mit vom Gebläse angesogener Umgebungsluft zu beaufschlagen, wie etwa aus der EP 2474261 A2 bekannt.

Der Verdampfer der Wärmepumpeneinrichtung ist typischerweise als Lamellenwärmetauscher ausgebildet und verfügt über eine Vielzahl von beabstandet zueinander angeordneten Lamellen. Im bestimmungsgemäßen Verwendungsfall wird die vom Gebläse angesogene Außenluft zwischen den Lamellen des Verdampfers hindurchgeführt, wo es zu einem Wärmeübergang von der Umgebungsluft auf ein Kältemittel der Wärmepumpeneinrichtung kommt. Da die von außen angesogene Umgebungsluft Staub- und/oder Schmutzpartikel enthält, kann es auch im bestimmungsgemäßen Verwendungsfall zu einer Verstopfung der zwischen den einzelnen Lamellen des Verdampfers ausgebildeten Zwischenräumen mit der Folge kommen, dass eine einwandfreie Funktion der Wärmepumpeneinrichtung nicht mehr gewährleistet ist.

Um einer Verstopfung des Verdampfers durch Staub- und/oder Schmutzpartikel entgegenzuwirken, ist es aus dem Stand der Technik bekannt, dem Verdampfer in Strömungsrichtung der Umgebungsluft einen Filter vorzuschalten. Mittels eines solchen Filters lassen sich in der Umgebungsluft befindliche Staub- und/oder Schmutzpartikel vor einem Hindurchführen der angesogenen Umgebungsluft durch den Verdampfer hindurch weitestgehend aussondern, womit die Funktionstüchtigkeit des Verdampfers erhalten bleibt.

Obgleich sich vorbeschriebene Filter im alltäglichen Praxiseinsatz bewährt haben, besteht Verbesserungsbedarf. So wird es verwenderseitig insbesondere als nachteilig empfunden, dass vorbekannte Filter der Wartung bedürfen. Es ist insbesondere notwendig, von Zeit zu Zeit eine Reinigung der Filter durchzuführen. Unterbleibt eine solche Reinigung, kann es zu einem Verstopfen des Filters mit der Folge kommen, dass nicht mehr hinreichend Umgebungsluft für einen funktionsgerechten Betrieb der Wärmepumpeneinrichtung angesogen werden kann. Die insoweit von Zeit zu Zeit erforderliche Reinigung des Filters wird verwenderseitig als lästig empfunden.

Aus der DE 1610189 A1 ist ein Wäschetrockner bekannt, bei dem die aus der Wäsche ausgetriebenen Dämpfe im Gegenstrom mit zu feinem Nebel zerstäubten Kühlwasser durch einen Kondensator geführt werden, wobei die mitgeführten Flusen abgeschieden werden.

Die EP 2206824 A2 offenbart einen Geschirrspüler mit einer Wärmepumpeneinrichtung zur Aufheizung von Spülflotte, bei dem ein mit Flüssigkeiten gefüllter, geschlossener Tank als Wärmequelle dient.

Die JP 2007125198A beschreibt einen Geschirrspülautomat mit einer Wärmepumpeneinrichtung zur Aufheizung von Spülflotte, die einen Verdampfer, eine unterhalb des Verdampfers angeordnete Kondensatwanne und ein Gebläse aufweist. Das Gebläse saugt Umgebungsluft von außen an, welche dann durch den Spülraum hindurch zum Verdampfer geführt wird.

Die DE 102007052835 A1 offenbart ein Wasch- oder Wäschetrockner mit einer Kondensatoreinrichtung, wobei das anfallende Kondensat mit einer Wasserwanne aufgefangen und dem Spülbehälter zugeleitet werden kann.

Es ist die **Aufgabe** der Erfindung, einen Geschirrspülautomaten der eingangs genannten Art dahingehend weiterzuentwickeln, dass ein verwendungsfreundlicherer Betrieb gestattet ist.

Zur **Lösung** dieser Aufgabe wird mit der Erfindung ein Geschirrspülautomat mit den Merkmalen von Anspruch 1 vorgeschlagen.

Nach der erfindungsgemäßen Ausgestaltung kommt als Staub- bzw. Schmutzpartikelfilter für die Umgebungsluft eine Einrichtung zur nassen Staubansammlung zum Einsatz. Dabei dient als Nassmedium für die erfindungsgemäße Einrichtung Wasser, und zwar das bei einem bestimmungsgemäßen Betrieb der Wärmepumpeneinrichtung ohnehin anfallende Kondensat. Dieses sammelt sich im bestimmungsgemäßen Betrieb in einer unterhalb der Wärmepumpeneinrichtung angeordneten Wasserwanne an. Die von außen angesogene Umgebungsluft wird über das in der Wasserwanne befindliche Kondensat geführt, infolge dessen es zu einem Abscheiden der von der Umgebungsluft mitgeführten Staubund/oder Schmutzpartikel an der Kondensatwasseroberfläche kommt. In einfacher Weise wird so eine Reinigung der im weiteren Verfahrensgang dem Verdampfer zugeführten Umgebungsluft erreicht.

Die sich an der Wasseroberfläche des Kondensats abscheidenden Staub- und Schmutzpartikel werden vom Kondensat aufgenommen und von diesem gebunden. Bei einer späteren Entsorgung des Kondensats erfolgt auch eine Entsorgung der vom Kondensat zuvor aufgenommenen Staub- und Schmutzpartikel.

Die erfindungsgemäße Ausgestaltung zeichnet sich insbesondere dadurch aus, dass sie verwenderseitig wartungsfrei ist. Die vom Kondensat im Zuge einer bestimmungsgemäßen Verfahrensdurchführung aufgenommenen Staub- und Schmutzpartikel werden zusammen mit dem Kondensat entsorgt. Einer verwenderseitig separat durchzuführenden Filterreinigung bedarf es insofern im Unterschied zum Stand der Technik nicht, weshalb die erfindungsgemäße Ausgestaltung insgesamt anwenderfreundlicher ist.

Darüber hinaus wird mit der erfindungsgemäßen Ausgestaltung sichergestellt, dass es aufgrund von in der Umgebungsluft befindlichen Staub- oder Schmutzpartikeln nicht zu einem Verstopfen des Verdampfers und/oder einem dem Verdampfer vorgeschalteten mechanischen Filter kommt, so dass ein dauerhaft einwandfreier Betrieb der erfindungsgemäßen Geschirrspülmaschine sichergestellt ist.

Die erfindungsgemäß vorgesehene Einrichtung zur nassen Staubansammlung verfügt über einer Wasserwanne, die unterhalb des Verdampfers angeordnet ist. Im bestimmungsgemäßen Verwendungsfall nimmt diese Wasserwanne das für eine nasse Staubansammlung benötigte Wasser auf, wobei sich von der Umgebungsluft Wasserwanne befindlichen Wassers abscheiden.

Die erfindungsgemäß vorgesehene Wasserwanne dient bevorzugter Weise der Wärmepumpeneinrichtung als Kondensatwanne. Es ist insofern bevorzugt, dass bei einem bestimmungsgemäßen Betrieb der Wärmepumpeneinrichtung am Verdampfer anfallende Kondensat als Wasser für die nasse Staubansammlung zu nutzen. Anstelle von Kondensat kann auch Frischwasser oder eine Mischung aus Frischwasser und Kondensat benutzt werden.

Bevorzugter Weise wird das in der Wasserwanne befindliche Wasser während des Ablaufs eines Spülprogramms in einen vom Geschirrspülautomaten bereitgestellten Spülraum eingeleitet, so dass auch bei der Verwendung von Frischwasser zur Befüllung der Wasserwanne kein zusätzlicher Wasserverbrauch entsteht.

Mit der Erfindung wird desweiteren vorgeschlagen ein Verfahren zum Betrieb eines mit einer Wärmepumpeneinrichtung und einer Wasserwanne ausgerüsteten Geschirrspülautomaten, bei dem zu Beginn eines Spülprogramms Frischwasser in die Wasserwanne eingeleitet wird.

Zu Beginn eines Spülprogramms befindet sich in der Wasserwanne mangels hinreichend langem Betriebs der Wärmepumpeneinrichtung noch kein Kondensat. Eine volle Filterwirkung setzt deshalb erst nach einiger Zeit ein, wenn sich genügend Kondensat innerhalb der Wasserwanne angesammelt hat. Zu Beginn eines Spülprogramms kann mithin mangels Wasser in der Wasserwanne keine hinreichende Abscheidung von Stauboder Schmutzpartikeln aus der angesogenen Umgebungsluft stattfinden. Es wird deshalb verfahrensseitig vorgeschlagen, zu Beginn eines Spülprogramms Frischwasser in die Wasserwanne einzuleiten. Damit ist eine volle Filterwirkung auch zu Beginn eines Spülprogramms sichergestellt, das heißt auch zu einem Zeitpunkt, zu dem sich noch kein oder nicht hinreichend viel Kondensat durch einen Betrieb der Wärmepumpeneinrichtung in der Wasserwanne angesammelt hat.

Das sich in der Wasserwanne befindliche Wasser, sei es zu Beginn eines Spülprogramms hinzugefügtes Frischwasser oder während eines bestimmungsgemäßen Wärmepumpenbetrieb entstandenes Kondensat, wird während des Ablaufs des Spülprogramms automatenseitig wieder verwendet, indem es in einen vom Geschirrspülautomaten bereitgestellten Spülraum als Spülflotte eingeleitet wird. Insofern geht das zu Beginn eines Spülprogramms in die Wasserwanne eingeleitete Frischwasser für den Spülprozess nicht verloren, das heißt es stellt sich kein Mehrwasserverbrauch durch die zu Beginn eines Spülprogramms stattfindende Frischwassereinleitung in die Wasserwanne statt.

Die Befüllung der Wasserwanne mit Frischwasser hat noch einen weiteren Vorteil. Bei sehr trockener Umgebungsluft fällt auch bei längerer Laufzeit der Wärmepumpeneinrichtung kein oder zu wenig Kondensat für eine hinreichend gute Filterwirkung an. Auch diese Problematik wird mit einer Einleitung von Frischwasser in die Wasserwanne zu Beginn eines Spülprogramms behoben.

Zu Beginn eines Spülprogramms wird die Wasserwanne vorzugsweise wie vorbeschrieben mit Frischwasser befüllt. Dabei ist es für eine hinreichende Filterwirkung nicht erforderlich, die gesamte Wasserwanne mit Frischwasser zu füllen. Es ist vielmehr ausreichend, eine solche Frischwassermenge in die Wasserwanne einzufüllen, dass bei einem bestimmungsgemäßen Betrieb die von außen angesogene Umgebungsluft über die Wasseroberfläche des sich in der Wasserwanne befindlichen Wassers in der Weise streicht, dass in der Umgebungsluft befindliche Schmutz- oder Staubpartikel vom Wasser abgeschieden werden. Typischerweise reicht es zu diesem Zweck aus, 0,1 l bis 0,5 l, vorzugsweise 0,2 l bis 0,4 l, noch mehr bevorzugt 0,3 l Frischwasser zu Beginn eines Spülprogramms in die Wasserwanne einzuleiten. Dabei hat die Wasserwanne vorzugsweise eine über 0,5 l liegende Aufnahmekapazität, und sie wird im weiteren Ablauf des Spülprogramms durch am Verdampfer der Wärmepumpeneinrichtung anfallendes Kondensat weiterbefüllt. Bei sehr feuchter Umgebungsluft können bis zu 0,6 l Kondensat bei einem bestimmungsgemäßen Verfahrensablauf anfallen. Bei einer vorangegangenen Befüllung der Wasserwanne mit zum Beispiel 0,4 l Frischwasser sammeln sich so bis zu ca.1,0 l Wasser innerhalb der Wasserwanne an, und zwar 0,4 l Frischwasser und 0,6 l Kondensatwasser. Dieses sich in der Wasserwanne befindliche Wasser lässt sich zu einem späteren Zeitpunkt während des Ablaufs des Spülprogramms nutzen, so dass sich der Wasserverbrauch der erfindungsgemäßen Geschirrspülmaschine insgesamt nicht erhöht.

Das Entleeren der Wasserwanne geschieht beispielsweise mittels einer Pumpe, die an den vom Spülbehälter des Geschirrspülautomaten bereitgestellten Spülraum angeschlossen ist und das sich in der Wasserwanne ansammelnde Wasser direkt in den Spülbehälter der Geschirrspülmaschine pumpt.

Gemäß einer bevorzugten Verfahrensdurchführung wird das zu Beginn eines Spülprogramms in die Wasserwanne eingeleitete Frischwasser über Lamellen eines Verdampfers der Wärmepumpeneinrichtung zugeführt, vorzugsweise gesprüht.

Es lässt sich auch im bestimmungsgemäßen Verwendungsfall nicht vermeiden, dass sich trotz vorgeschalteter Filtereinrichtung Staub- und/oder Schmutzpartikel an den Lamellen des Verdampfers der Wärmepumpeneinrichtung absetzen. Die Menge an Staub- und/oder Schmutzpartikel lässt sich durch die vorbeschriebene Einrichtung zur nassen Staubansammlung zwar stark reduzieren, allerdings nicht bis auf Null, so dass entsprechende Anhaftungen von Staub- und/oder Schmutzpartikeln an den Lamellen des Verdampfers nicht zu vermeiden sind. Um einer Verstopfung des Verdampfers vorzubeugen, wird mit besonderem Vorteil verfahrensseitig vorgeschlagen, das in die Wasserwanne einzuleitende Frischwasser über die Lamellen des Verdampfers zu sprühen. Es wird so erreicht, dass unter Umständen an den Lamellen des Verdampfers anhaftende Staub- und/oder Schmutzpartikel bei Einleitung von Frischwasser abgespült werden, es also zu einer Reinigung der Verdampferlamellen kommt. Die auf diese Weise abgespülten Staub- und/oder Schmutzpartikel werden mit samt dem eingeleiteten Frischwasser mitgeschwemmt und sammeln sich in der unterhalb des Verdampfers angeordneten Wasserwanne an. Von hieraus kann dann in der schon vorbeschriebenen Weise eine Entsorgung stattfinden.

Mit der erfindungsgemäßen Verfahrensdurchführung wird so insgesamt sichergestellt, dass eine Verstopfung des Verdampfers durch Staub- und/oder Schmutzpartikel sicher unterbunden ist. So wird zum einen eine Filterung durch nasse Staubansammlung sowie zum anderen eine Reinigung der Verdampferlamellen erreicht.

Weitere Vorteile und Merkmale der Erfindung ergeben sich aus der nachfolgenden Beschreibung anhand der Figuren. Dabei zeigen
- Figur 1: in rein schematischer Seitenansicht einen erfindungsgemäßen Geschirrspülautomaten;
- Figur 2: in schematischer Draufsicht von oben die Wärmepumpeneinrichtung eines Geschirrspülautomaten nach Figur 1;
- Figur 3: in schematischer Seitenansicht die erfindungsgemäße Einrichtung zur nassen Staub- und Schmutzansammlung und
- Figur 4: in schematischer Darstellung ein mit einer Sprüheinrichtung ausgerüsteten Verdampfer.

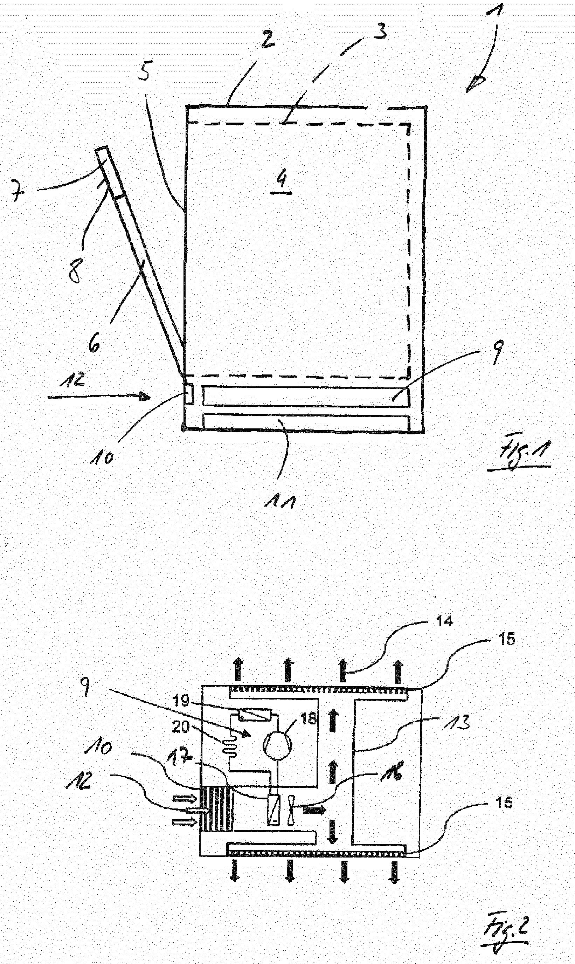

Figur 1 lässt in rein schematischer Darstellung einen Geschirrspülautomaten in Form einer Haushaltsgeschirrspülmaschine 1 erkennen.

Die Geschirrspülmaschine 1 verfügt über ein Außengehäuse 2. Dieses nimmt einen Spülbehälter 3 auf, der seinerseits einen Spülraum 4 bereitstellt. Der Spülbehälter 3 dient im bestimmungsgemäßen Verwendungsfall der Aufnahme von zu reinigendem Spülgut, zu welchem Zweck typischerweise Spülkörbe vorgesehen sind, die der besseren Übersicht wegen in der Figur nicht dargestellt sind.

Der vom Spülbehälter 3 bereitgestellte Spülraum 4 ist über eine Beschickungsöffnung 5 zugänglich. Diese ist mittels einer verschwenkbar am Gehäuse 2 angeordneten Spülraumtür 6 fluiddicht verschließbar.

Zur Beaufschlagung von zur reinigendem Spülgut mit Spülflotte sind innerhalb des Spülbehälters 3 in den Figuren nicht näher dargestellte Sprüharme angeordnet.

Die Spülraumtür 6 verfügt zum Zwecke einer bestimmungsgemäßen Bedienung der Geschirrspülmaschine 1 über ein Bedienfeld 7. Dieses ist mit einem Anzeigedisplay 8 ausgerüstet, das zum Zwecke der optischen Anzeige beispielsweise über LEDs verfügt, die im gezeigten Ausführungsbeispiel nicht näher dargestellt sind.

Zur Aufheizung der im bestimmungsgemäßen Verwendungsfall zur Spülgutreinigung zum einsatzkommenden Spülflotte dient eine Wärmepumpeneinrichtung 9. Diese ist in Höhenrichtung der Geschirrspülmaschine 1 unterhalb des den Spülraum 4 bereitstellenden Spülbehälters 3 angeordnet, wie insbesondere die Darstellung nach Figur 1 erkennen lässt.

Figur 2 lässt in einer schematischen Ansicht von oben die Wärmepumpeneinrichtung 9 der Geschirrspülmaschine 1 erkennen. Wie sich aus dieser Darstellung ergibt, verfügt die Wärmepumpeneinrichtung 9 im Wesentlichen über vier Bauteile, die strömungstechnisch über ein Rohrleitungssystem miteinander verbunden sind, in welchem ein Arbeitsmedium strömt. In Strömungsrichtung des Kältemittels sind die einzelnen Bauteile so angeordnet, dass zuerst ein Verdampfer 17, anschließend ein Verdichter 18 und schließlich ein Verflüssiger 19 durchströmt werden. Anschließend durchläuft das Kältemittel eine Expansionseinrichtung 20 bevor es wieder dem Verdampfer 17 zugeführt wird.

Für den Betrieb des Wärmepumpenkreislaufes wird zuerst flüssiges Kältemittel in den Verdampfer 17 eingespritzt. Aufgrund des niedrigen Drucks des Kältemittels im Verdampfer 17 kann das Kältemittel bei Niedrigtemperaturen verdampfen. Anschließend saugt der Verdampfer 18 das gasförmige Kältemittel mit niedrigem Druck an und verdichtet es auf einen hohen Druck. Dabei wird das Kältemittel heiß. Das Kältemittel beinhaltet dadurch ungefähr die Summe der Verdampfungsenergie und Antriebsenergie des Verdichters 18. Diese Energie wird innerhalb des Verflüssigers 19 wieder abgegeben. Dies geschieht durch das Kondensieren des Kältemittels. Schließlich wird das flüssige Kältemittel mittels der Drosselstelle 20 auf den niedrigen Druck expandiert, so dass es wieder verdampfen kann, um den Wärmepumpenkreislauf ein weiteres Mal zu durchlaufen.

Damit dieser Wärmepumpenkreislauf funktioniert, muss dem Verdampfer Wärmeenergie zur Verfügung gestellt und dem Verflüssiger Wärme entzogen werden. Der Verdampfer erhält dabei wie zuvor beschrieben die notwendige Wärmeenergie zur Verdampfung des Kältemittels durch das Abkühlen von Zuluft (d.h. Raumluft), während der Verflüssiger die Wärmeenergie an Spülflotte der Geschirrspülmaschine abgibt.

Zur Beschickung des Verdampfers 17 mit Umgebungsluft 12 kommt ein Gebläse 16 zum Einsatz, das in Strömungsrichtung der Außenluft 12 dem Verdampfer 17 nachgeschaltet ist, wie sich dies insbesondere aus der Darstellung nach Figur 2 ergibt. Die nach einem Passieren des Verdampfers 17 abgekühlte Umgebungsluft 12 gelangt als dann über einen Luftkanal 13 zu gehäuseseitigen Luftauslässen 15, durch welche die abgekühlte Umgebungsluft 12 die Geschirrspülmaschine 1 als Abluft 14 verlässt.

Infolge der Abkühlung der Umgebungsluft 12 bei einem bestimmungsgemäßen Betrieb der

Wärmepumpeneinrichtung 9 kommt es zu einem Auskondensieren von Luftfeuchtigkeit, die sich am Verdampfer 17 niederschlägt. Dieses anfallenden Kondensat tropft vom Verdampfer 17 ab und sammelt sich in einer dafür vorgesehenen Wasserwanne 11 an, die in Höhenrichtung der Geschirrspülmaschine 1 unterhalb der Wärmepumpeneinrichtung 9 angeordnet ist, wie sich dies insbesondere aus der schematischen Darstellung nach Figur 1 ergibt. Dieses sich in der Wasserwanne 11 ansammelnde Kondensatwasser kann im weiteren Verlauf eines von der Geschirrspülmaschine 1 absolvierten Spülprogramms entweder verworfen oder durch Einleitung in den Spülbehälter 3 wieder verwendet werden.

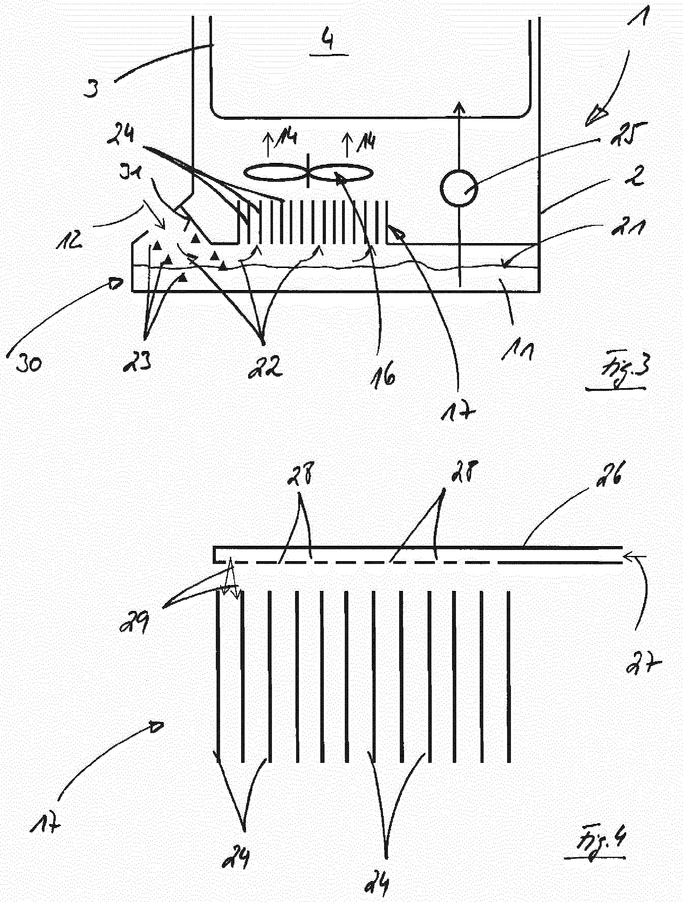

Die Geschirrspülmaschine 1 nach der Erfindung verfügt über eine Einrichtung 30 zur nassen Staubansammlung. Die Funktionsweise dieser Einrichtung 30 ergibt sich insbesondere aus der Darstellung nach Figur 3.

Während eines bestimmungsgemäßen Programmablaufs wird Umgebungsluft 12 mittels des Gebläses 16 der Wärmepumpeneinrichtung 9 angesogen und gelangt über einen Lufteinlass 10 zum Verdampfer 17, der im gezeigten Ausführungsbeispiel als Lamellenwärmetauscher ausgebildet ist. Dabei ist der Lufteinlass 10 mit Führungsflächen 31 für die Umgebungsluft 12 ausgerüstet, die zumindest abschnittsweise in Richtung der von in der Wasserwanne 11 befindlichem Wasser bereitgestellten Wasseroberfläche 21 verlaufend ausgebildet sind. Infolge dessen trifft die vom Gebläse 16 über den Lufteinlass 10 angesogene Umgebungsluft 12 auf die Wasseroberfläche 21 des in der Wasserwanne 11 befindlichen Wassers auf. Die von der Umgebungsluft 12 mitgeführten Staub- und/oder Schmutzpartikel 23 werden zum größten Teil an der Wasseroberfläche 21 abgeschieden, infolge dessen es zu einer Reinigung der Umgebungsluft 12 kommt, bevor diese in Entsprechung der Pfeile 22 durch den Verdampfer 17 geführt wird.

Die Geschirrspülmaschine 1 ist mit einer Pumpe 25 ausgerüstet, die während des Ablaufs eines bestimmungsgemäßen Spülprogramms das in der Wasserwanne 11 befindliche Wasser in den von der Geschirrspülmaschine 1 bereitgestellten Spülbehälter 3 einleitet. Die zuvor von dem in der Wasserwanne 11 befindlichem Wasser aufgenommenen Staubund/oder Schmutzpartikel werden zusammen mit dem Wasser abgepumpt und in den Spülbehälter 3 befördert, von wo aus dann nach Beendigung des Spülprogramms eine Entsorgung über den geschirrspülmaschinenseitigen Entsorgungsanschluss stattfindet.

Es ist gemäß einem besonderen Vorschlag der Erfindung verfahrensseitig vorgesehen, dass zu Beginn eines Spülprogramms Frischwasser 27 in die Wasserwanne 11 eingeleitet wird, wobei das Frischwasser 27, vorzugsweise Weichwasser, d.h. enthärtetes Frischwasser, über die Lamellen 24 des Verdampfers 17 gesprüht wird. Zu diesem Zweck ist vorrichtungsseitig eine Sprüheinrichtung 26 vorgesehen, die über entsprechende Öffnungen 28 in Entsprechung der Pfeile 29 Frischwasser 27 auf die Lamellen 24 des Verdampfers 17 gibt. Das Besprühen der Lamellen 24 mit Frischwasser 27 hat den Vorteil, dass sich etwaige an den Lamellen 24 absetzende Schmutz- und/oder Schmutzpartikel abgespült und zusammen mit dem Frischwasser in die Wasserwanne 11 gespült werden. Infolge dieser Verfahrensdurchführung findet eine regelmäßige Reinigung der Verdampferlamellen 24 statt, so dass Anhaftungen von Staub- und/oder Schmutzpartikeln dauerhaft unterbunden sind.

Die Einleitung von Frischwasser 27 in die Wasserwanne 11 hat zudem den Vorteil, dass auch zu Beginn eines Spülprogramms und/oder bei zu trockener Umgebungsluft hinreichend Wasser in der Wasserwanne 11 zur Verfügung steht, um in vorbeschriebener Weise eine Filterung der eingeförderten Umgebungsluft 12 mit voller Filterwirkung zu erreichen.

Dabei lässt sich die zu Beginn eines Spülprogramms zur Befüllung der Wasserwanne 11 eingeleitete Frischwasssermenge ebenso wie das im Weiteren anfallende Kondensat zu einem späteren Zeitpunkt im Spülvorgang durch Wiederverwendung nutzen, so dass sich der Wasserverbrauch durch Einspeisung des Frischwassers 27 insgesamt nicht erhöht.

### Bezugszeichen

- 1: Geschirrspülmaschine
- 2: Gehäuse
- 3: Spülbehälter
- 4: Spülraum
- 5: Beschickungsöffnung
- 6: Spülraumtür
- 7: Bedienfeld
- 8: Anzeigedisplay
- 9: Wärmepumpeneinrichtung
- 10: Lufteinlass
- 11: Wasserwanne
- 12: Umgebungsluft
- 13: Luftkanal
- 14: Abluft
- 15: Luftauslass
- 16: Gebläse
- 17: Verdampfer
- 18: Verdichter
- 19: Verflüssiger
- 20: Expansionseinrichtung
- 21: Wasseroberfläche
- 22: Pfeil
- 23: Staub- und/oder Schmutzpartikel
- 24: Lamelle
- 25: Pumpe
- 26: Sprüheinrichtung
- 27: Frischwasser
- 28: Öffnung
- 29: Pfeil
- 30: Einrichtung
- 31: Führungsfläche

## Patentansprüche

1. Geschirrspülautomat, insbesondere Haushaltsgeschirrspülmaschine, mit einer Wärmepumpeneinrichtung (9) zur Aufheizung von Spülflotte, die einen Verdampfer (17) und ein Gebläse (16) aufweist, wobei das Gebläse (16) der Beaufschlagung des Verdampfers (17) mit Umgebungsluft (12) dient, welche von dem Gebläse (16) durch einen Lufteinlass (10) von außen in den Geschirrspülautomaten angesaugt werden kann, **gekennzeichnet durch** eine Einrichtung (30) zur nassen Staubansammlung, die dem Verdampfer (17) in Strömungsrichtung der Umgebungsluft (12) vorgeschaltet ist, und die eine unterhalb des Verdampfers (17) angeordnete Wasserwanne (11) aufweist,
wobei der Lufteinlass (10) Führungsflächen (31) für die Umgebungsluft (12) aufweist, die zumindest abschnittsweise in Richtung der von im bestimmungsgemäßen Verwendungsfall in der Wasserwanne (11) befindlichem Wasser bereitgestellten Wasseroberfläche (21) verlaufend ausgebildet sind.

2. Geschirrspülautomat nach Anspruch 1, **dadurch gekennzeichnet, dass** die Wasserwanne der Wärmepumpeneinrichtung (9) als Kondensatwanne dient.

3. Verfahren zum Betrieb eines mit einer Wärmepumpeneinrichtung (9) und einer unterhalb eines Verdampfers (17) der Wärmepumpeneinrichtung (9) angeordneten Wasserwanne (11) ausgerüsteten Geschirrspülautomaten (1), bei dem zu Beginn eines Spülprogramms Frischwasser (27) in die Wasserwanne (11) eingeleitet wird, und bei dem Umgebungsluft (12) mittels eines Gebläses (16) von außen in den Geschirrspülautomaten angesogen wird, auf die Wasseroberfläche (21) des in der Wasserwanne (11) befindlichen Wassers auftrifft und anschließend zum Verdampfer (17) der Wärmepumpeneinrichtung (9) gelangt.

4. Verfahren nach Anspruch 3, bei dem das Frischwasser (27) über Lamellen (24) eines Verdampfers (17) der Wärmepumpeneinrichtung (9) geführt wird.

5. Verfahren nach Anspruch 4, bei dem das Frischwasser (27) über die Lamellen (24) gesprüht wird.

6. Verfahren nach Anspruch 4 oder 5, bei dem 0,1 l bis 0,5 l, vorzugsweise 0,2 l bis 0,4 l Frischwasser verwendet wird.

7. Verfahren nach einem der vorhergehenden Ansprüche 3 bis 6, bei dem während des Ablaufs des Spülprogramms in der Wasserwanne (11) befindliches Wasser in einen vom Geschirrspülautomaten (1) bereitgestellten Spülraum (4) geleitet wird.

## Claims

1. Automatic dishwasher, in particular a domestic dishwasher, comprising a heat pump device (9) for heating washing solution, which device comprises an evaporator (17) and a fan (16), the fan (16) supplying the evaporator (17) with ambient air (12) that can be sucked into the automatic dishwasher from the outside through an air inlet (10) by means of the fan (16), **characterised by** a device (30) for wet dust collection that is upstream of the evaporator (17) in the flow direction of the ambient air (12) and that comprises a water tray (11) arranged below the evaporator (17),
the air inlet (10) comprising guide surfaces (31) for the ambient air (12), which surfaces extend, at least in portions, towards the water surface (21) that is provided by the water located in the water tray (11) during use as intended.

2. Automatic dishwasher according to claim 1, **characterised in that** the water tray of the heat pump device (9) functions as a condensate tray.

3. Method for operating an automatic dishwasher (1) equipped with a heat pump device (9) and a water tray (11) arranged below an evaporator (17) of the heat pump device (9), in which fresh water (27) is fed into the water tray (11) at the start of a washing program, and in which ambient air (12) is sucked into the automatic dishwasher from the outside by means of a fan (16), impinges on the water surface (21) of the water located in the water tray (11), and then arrives at the evaporator (17) of the heat pump device (9).

4. Method according to claim 3, in which the fresh water (27) is guided over slats (24) of an evaporator (17) of the heat pump device (9).

5. Method according to claim 4, in which the fresh water (27) is sprayed over the slats (24).

6. Method according to either claim 4 or claim 5, in which 0.1 l to 0.5 l, preferably 0.2 l to 0.4 l of fresh water is used.

7. Method according to any of the preceding claims 3 to 6, in which, during the course of the washing program, water located in the water tray (11) is fed into a washing chamber (4) provided by the automatic dishwasher (1).

## Revendications

1. Lave-vaisselle automatique, en particulier lave-vaisselle domestique, avec un système de pompe à chaleur (9) pour le chauffage du bain de lavage, qui présente un évaporateur (17) et un ventilateur (16), dans lequel le ventilateur (16) sert à alimenter l'évaporateur (17) en air ambiant (12) qui peut être aspiré dans le lave-vaisselle automatique à partir de l'extérieur par le ventilateur (16) à travers une entrée d'air (10), **caractérisé par** un système (30) pour la collecte de poussière humide qui est monté en amont de l'évaporateur (17) dans la direction d'écoulement de l'air ambiant (12), et qui présente une cuve à eau (11) disposée au-dessous de l'évaporateur (17),
dans lequel l'entrée d'air (10) présente des surfaces de guidage (31) pour l'air ambiant (12) qui s'étendent au moins par tronçons dans la direction de la surface d'eau (21) fournie par l'eau située dans la cuve à eau (11) en cas d'utilisation conforme.

2. Lave-vaisselle automatique selon la revendication 1, **caractérisé en ce que** la cuve à eau du système de pompe à chaleur (9) sert de cuve à condensat.

3. Procédé de fonctionnement d'un lave-vaisselle automatique (1) équipé d'un système de pompe à chaleur (9) et d'une cuve à eau (11) disposée au-dessous d'un évaporateur (17) du système de pompe à chaleur (9), dans lequel, au début d'un programme de lavage, de l'eau fraîche (27) est introduite dans la cuve à eau (11), et dans lequel de l'air ambiant (12) est aspiré dans le lave-vaisselle automatique à partir de l'extérieur au moyen d'un ventilateur (16), heurte la surface d'eau (21) de l'eau située dans la cuve à eau (11), et arrive ensuite à l'évaporateur (17) du système de pompe à chaleur (9).

4. Procédé selon la revendication 3, dans lequel l'eau fraîche (27) est guidée via des lamelles (24) d'un évaporateur (17) du système de pompe à chaleur (9).

5. Procédé selon la revendication 4, dans lequel l'eau fraîche (27) est pulvérisée sur les lamelles (24).

6. Procédé selon la revendication 4 ou 5, dans lequel on utilise de 0,1 l à 0,5 l, de préférence de 0,2 l à 0,4 l d'eau fraîche.

7. Procédé selon l'une des revendications précédentes 3 à 6, dans lequel, pendant le déroulement du programme de lavage, de l'eau située dans la cuve à eau (11) est conduite dans un espace de lavage (4) fourni par le lave-vaisselle automatique (1).
